(19) Europäisches Patentamt
European Patent Office
Office européen des brevets

(11) Publication number: 0 402 022 A1

(12) **EUROPEAN PATENT APPLICATION**

(21) Application number: **90305746.1**

(51) Int. Cl.[5]: **C08G 18/65, C08G 18/80**

(22) Date of filing: **25.05.90**

(30) Priority: **08.06.89 GB 8913196**

(43) Date of publication of application:
**12.12.90 Bulletin 90/50**

(84) Designated Contracting States:
**AT BE CH DE DK ES FR GB GR IT LI NL SE**

(71) Applicant: **DEUTSCHE ICI GMBH**
**Emil-von-Behring-Strasse 2 PO Box 500728**
**D-6000 Frankfurt/Main 50(DE)**

(72) Inventor: **Hupe, Günter**
**In der Siedlung 46**
**D-3255 Hülsede(DE)**
Inventor: **Schlitte, Peter**
**Glogauer Strasse 15**
**D-4972 Löhne 3(DE)**
Inventor: **Heyland, Peter**
**Grüner Brink 19**
**D-2082 Uetersen(DE)**

(74) Representative: **Baken, Philippus Johannes L. H. et al**
**Imperial Chemical Industries PLC Legal Department: Patents P.O. Box 6 Bessemer Road**
**Welwyn Garden City Herts. AL7 1HD(GB)**

(54) **Polyisocyanate and polyol composition.**

(57) Polyisocyanate composition comprising an NCO-ended reaction product of a polyisocyanate and a sterically hindered diamine and polyol composition comprising the reaction product of a polyisocyanate and a sterically hindered aromatic diamine. Foams may be obtained from such polyisocyanates and polyols without using physical organic blowing agents.

EP 0 402 022 A1

The present invention is concerned with a novel polyisocyanate composition, with a novel polyol composition and with a novel system for preparing polyurethane foams. From EP 177766 it is known to use sterically hindered aromatic diamines in a polyol which is to be used for preparing free-foamed, especially sprayed, polyurethane foams.

Surprisingly it was found that the dripping properties of polyurethane systems could be reduced by adding a part of the diamines to the polyisocyanate composition prior to the preparation of the foam and/or by using a polyol composition comprising the reaction product of a polyisocyanate and such diamines. The system exhibits improved dripping properties and the foams obtained show excellent adhesive- and fire properties. The system is particularly suited for spraying and for preparing foams e.g. from cartridges comprising such systems e.g. for sealing purposes.

Consequently the present invention is concerned with a polyisocyanate composition comprising an NCO-ended reaction product of a polyisocyanate and a sterically hindered aromatic diamine. The invention is further concerned with a polyol composition comprising the reaction product of a polyisocyanate and a sterically hindered aromatic diamine. Still further the invention is concerned with a system for preparing a foam said system comprising a polyisocyanate composition and a polyol composition with the proviso that the polyisocyanate composition comprises an NCO-ended reaction product of a polyisocyanate and a sterically hindered aromatic diamine and/or the polyol composition comprises the reaction product of a polyisocyanate and a sterically hindered aromatic diamine. Foams may be prepared in the absence of CFC-blowing agents, like CFC-11. The systems may be used for making flexible and rigid foams and especially semi-rigid foams.

The polyisocyanates used may be the conventional ones for making flexible, rigid and semi-rigid foams. Suitable polyisocyanates are organic aromatic diisocyanates and isocyanates of higher functionality like tolylene-2,4- and 2,6-diisocyanates, diphenylmethane-2,4′ and 4,4′-diisocyanates, and mixtures thereof and mixtures of these diisocyanates with organic aromatic polyisocyanates of higher functionality like the mixtures obtained by phosgenation of aniline/formaldehyde condensates. Such mixtures are well-known in the art and include the crude phosgenation products containing mixtures of methylene bridged polyphenyl polyisocyanates, including diisocyanate, triisocyanate and higher polyisocyanates together with any phosgenation by-products.

Preferred isocyanates to be used in the present invention are those wherein the isocyanate is an aromatic diisocyanate or polyisocyanate of higher functionality such as a pure diphenylmethane diisocyanate or mixtures of methylene bridged polyphenyl polyisocyanates containing diisocyanates, triisocyanate and higher functionality polyisocyanates. Methylene bridged polyphenyl polyisocyanates are well known in the art and have the generic formula :

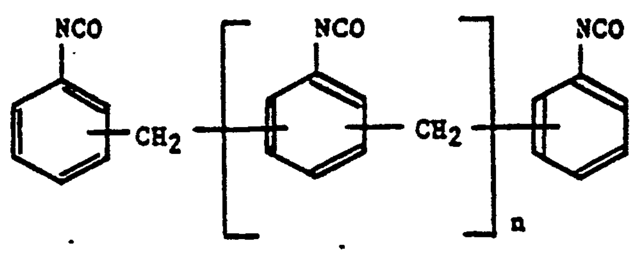

where n is 0 or more. They are prepared by phosgenation of corresponding mixtures of polyamines obtained by condensation of aniline and formaldehyde.

Modified polyisocyanates, like those containing isocyanurate-, carbodiimide-, uretonimine-, allophanate- or uretidinedione groups may be employed as well.

Other organic isocyanates which can be used in the invention include isocyanate-ended prepolymers made by reaction of an excess of a diisocyanate or higher functionality polyisocyanate with a hydroxyl-ended polyester or hydroxyl-ended polyether and products obtained by reacting an excess of diisocyanate or higher functionality polyisocyanate with a monomeric polyol or mixture of monomeric polyols such as ethylene glycol, trimethylol propane or butane-diol and isocyanate-ended prepolymers prepared using hydrophobic polyols such as castor oil.

The most preferred polyisocyanates are polymethylene polyphenylene polyisocyanates and isocyanate-ended prepolymers thereof. Preferably, the polyisocyanate is liquid at room temperature.

For semi-rigid foams Suprasec DNR from Imperial Chemical Industries may be most preferably used (Suprasec is a trademark of Imperial Chemical Industries PLC). The sterically hindered aromatic diamines may be selected from those having the formula

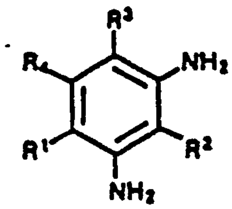

or

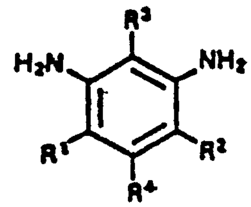

wherein $R_1$ and $R_2$ independently are alkyl ($C_1$-$C_4$), $R_3$ and $R_4$ independently are H or methyl, and mixtures thereof.

Preferably

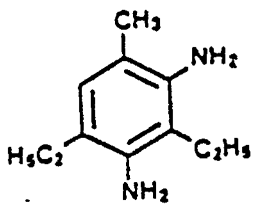

and/or

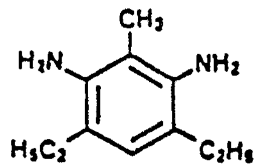

is used. More preferred are mixtures consisting of

80 % w of

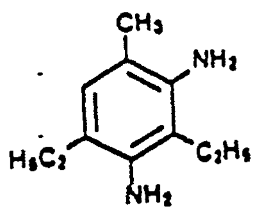

and 20 % w of

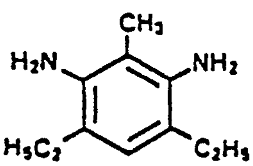

and mixtures consisting of 65 % w of

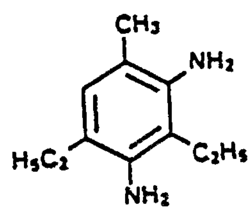

and 35 % w of

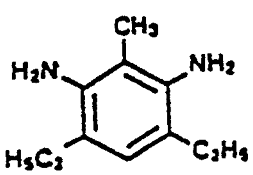
,

The polyisocyanate composition may be prepared by combining the polyisocyanate and the sterically hindered aromatic diamine at ambient temperature and pressure; preferably the sterically hindered aromatic diamine is diluted with an inert diluent prior to adding it to the polyisocyanate. The amount of diluent is 1-25 % by weight (% w) calculated on the amount of polyisocyanate and at least two times the amount of diamine on a weight basis.

The amount of diamine used is 0.5-5 % w calculated on the amount of polyisocyanate. Further, the amount of polyisocyanate and sterically hindered aromatic diamine is such that there is an excess of

isocyanate groups opposite the amine groups. Preferably the ratio of NCO : $NH_2$ groups is 50-150:1 If desired the diamine may be added together with an amount of polyol in order to make a NCO-ended prepolymer. The reaction between the polyisocyanate and the sterically hindered aromatic diamine provides for urea groups, substantially no biuret groups are formed. The NCO value of the polyisocyanate composition according to the present invention ranges from 20 to 30% w.

The polyol used in the polyol composition may be any conventional polyol for making flexible, rigid or semi-rigid foams. For flexible foams the polyols in general have a functionality of 2-4 and an average equivalent weight ranging from 300 - 2500, preferably from 500 to 1500. Polyols for rigid foams are preferably selected from polyols having a functionality of at least 2 and a molecular weight from 62-1500, the functionality and molecular weight appropriate to either polyurethane or polyisocyanurate foams being selected in known manner. Polyols for semi-rigid foams may be selected from those mentioned above provided that the specific requirements as to molecular weight and functionality, known to those skilled in the art, are met. Suitable polyether polyols include those which are prepared by reacting one or more alkylene oxides or substituted alkylene oxides with one or more active hydrogen containing initiator compounds. Suitably such oxides include for example ethylene oxide, propylene oxide, butylene oxide, epichlorhydrin and epibromhydrin.

Suitable initiator compounds include, for example, water ethylene glycol, propylene glycol, butane diol, hexane diol, glycerol, trimethylol propane, pentaerythritol, hexanetriol, triethanolamine, sorbitol, sucrose, hydroquinone, resorcinol, catechol, bisphenols, novolac resins and phosphoric acid. These initiators may be used as polyols as well.

Further suitable initiators include, for example, ammonia, ethylenediamine, diaminopropanes, diaminobutanes, diaminopentanes, diaminohexanes, ethanolamine, aminoethylethanolamine, aniline, 2,4-toluenediamine, 2,6-toluenediamine, 2,4′-diamino-diphenylmethane, 4,4′-diaminodiphenylmethane, 1,3-phenylenediamine, 1,4-phenylenediamine, naphthylene-1,5-diamine, 4,4′-di(methylamino)-diphenylmethane, 1-methyl-2-methylamino-4-aminobenzene, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, and 3,5,3′,5′-tetraethyl-4,4′-diaminodiphenylmethane.

Suitable polyester polyols which can be employed include, for example, those prepared by reacting one or more polycarboxylic acids or anhydrides or esters thereof with one or more polyhydric alcohols. The polycarboxylic acids may be aliphatic, cycloaliphatic, aromatic and/or heterocyclic and may be substituted (e.g. with halogen) and/or unsaturated. Examples of carboxylic acids of this kind include glutaric acid, succinic acid, adipic acid, suberic acid, azelaic acid, sebacic acid, phthalic acid, terephthalic acid, isophthalic acid, trimellitic acid, tetrahydrophthalic acid, hexahydrophthalic acid, tetrachlorophthalic acid, maleic acid, fumaric acid, dimeric and trimeric fatty acids, which may be in admixture with monomeric fatty acids, terephthalic acid, and the like.

Examples of suitable polyhydric alcohols include ethylene glycol; 1,2-propylene glycol; 1,3-propylene glycol; butylene glycols; 1,6-hexane diol; 1,8-octane diol; neopentyl glycol; 1,4-bis-hydroxymethyl cyclohexane; 2-methyl-1,3 propane diol; glycerol; trimethylol propane; 1,2,6-hexane triol; 1,2,4-butane triol; trimethylol ethane; pentaerythritol; diethylene glycol; triethylene glycol; polyethylene glycols; dipropylene glycol; tripropylene glycol; polypropylene glycols; dibutylene glycol; or polybutylene glycols. It is also possible to use polyesters of lactones such as caprolactone.

Mixtures of polyols may be used.

For preparing the reaction product of a polyisocyanate and a sterically hindered aromatic diamine, which reaction product is comprised in the polyol composition, any of the aforementioned polyisocyanates and sterically hindered aromatic diamines may be used. The polyisocyanate and the diamine may be combined, preferably after the diamine has been diluted as described before, so as to prepare the reaction product, which subsequently is combined with the polyol, or may be added to the polyol so as to form the reaction product in situ, in which case the diamine is preferably added to the polyol prior to the polyisocyanate. This last way of preparation is preferred. The reaction is conducted at ambient pressure and temperature; no biuret groups are formed. The amount of reaction product of the reaction between the polyisocyanate and the diamine is 1-15 % w calculated on the total amount of polyol in the polyol composition. The relative amounts of polyisocyanate and diamine are such that the ratio of free isocyanate groups to free amine groups is 1:3 to 3:1 and preferably 1:1,5 to 1,5:1 and more preferably 1:1,2 to 1,2:1.

The polyol composition may, if desired, further comprise usual additives, like water, polyurethane and polyisocyanurate formation enhancing catalysts, surfactants, plasticisers, fire retardants, smoke suppressants, blowing agents, stabilizers and the like.

The system according to the present invention comprises a polyisocyanate composition according to the present invention and/or a polyol composition according to the present invention. If one of the two is not

according to the invention it may be any conventional composition. Preferably the system comprises the polyisocyanate composition as well as the polyol composition according to the present invention. The expression "system" as used herein refers to a set of individual compositions which are produced and/or marketed with the obvious purpose to be suitable for use in combination with each other to perform a specific process or to achieve specific performances. The usual additives mentioned before may be present in the system separately from the polyisocyanate and polyol compositions.

The system is suitable for making flexible, rigid and semi-rigid foams. The foams may be made in the absence of any CFC. The density of the foams may vary from 20 to 200 and preferably from 25-80 $kg/m^3$.

The system is especially useful for preparing semi-rigid foams by means of a cartridge, in particular a coaxial cartridge like the one described in US patent 4366919.

For making the foams the polyisocyanate and polyol composition are combined in conventional ways. The relative amounts of the polyisocyanate and the polyol composition used for making the foams are conventional as well. In general their weight ratios may vary from 3:1 to 1:3 and preferably from 2:1 to 1:2 and more preferably from 1.3:1 to 1:1.3.

The polyisocyanate and polyol compositions according to the present invention exhibit thixotropic properties. The viscosity of a typical polyol and polyisocyanate composition under mixing conditions (5.66 rpm) after 2 min of mixing was 12,100 and 36,600 mPa.s respectively while the viscosity at the beginning of the mixing procedure was 14,240 and 45,600 mPa.s respectively. Therefore these compositions may be advantageously applied whenever such properties are desirable.

The invention is illustrated by the following examples.

Example 1

Polypropylene glycol (MW 2020, 0.39 pbw) and a mixture of 1-methyl-3,5-diethyl-2,4-diaminobenzene and 1-methyl-3,5-diethyl-2,6-diaminobenzene (0.91 pbw) were diluted in 5 pbw of tris(2-chloropropyl)-phosphate. This mixture was combined with 93.7 pbw of Suprasec DNR.

Example 2

To a polyol composition comprising 23.3 pbw of Daltocel F2805, 30 pbw of Daltolac P510, 30 pbw of tris(2-chloropropyl) phosphate, 2.5 pbw of 1,4-butanediol, 3.0 pbw of Tegostab B8404, 2.2 pbw of water, 2.0 pbw of dimethylcyclohexylamine, 1.0 pbw of LB 50 catalyst, 0.9 pbw of polypropylene glycol (MW 2020) and 2.1 pbw of a mixture of the diamines mentioned in example 1 was added 3.0 pbw of Suprasec DNR.

Example 3

The polyisocyanate composition from example 1 and the polyol composition from example 2 were combined. When applying the system hardly any dripping was observed. A foam was obtained having a density of 49.8 $kg/m^3$. The foam had good fire properties and did not shrink.

Suprasec, Daltocel and Daltolac are trademarks of Imperial Chemical Industries PLC. Tegostab is a trademark of Th. Goldschmidt Ag.

**Claims**

1. Polyisocyanate composition comprising an NCO-ended reaction product of a polyisocyanate and a sterically hindered aromatic diamine.

2. Polyol composition comprising the reaction product of a polyisocyanate and a sterically hindered aromatic diamine.

3. Composition according to claims 1-2 characterised in that the diamine is selected from those having the formula

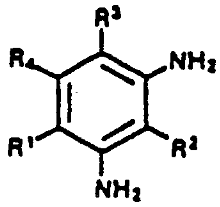

or

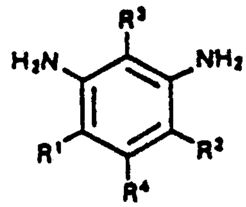

wherein $R_1$ and $R_2$ independently are alkyl ($C_1$-$C_4$) and $R_3$ and $R_4$ independently are H or methyl, and mixtures thereof.

4. Polyisocyanate composition according to claim 1 characterised in that the reaction product is the product of the reaction of 0.5 - 5.0 pbw of the diamine per 100 pbw of the polyisocyanate.

5. Polyol composition according to claim 2 characterised in that the amount of the reaction product is 1 - 15 % weight calculated on the total amount of polyol in the polyol composition.

6. System for making foams, said system comprising a polyisocyanate composition and a polyol composition with the proviso that the polyisocyanate composition is a composition according to claims 1, 3 or 4 and/or the polyol composition is a composition according to claims 2, 3 or 5.

European Patent Office

# EUROPEAN SEARCH REPORT

Application Number

EP 90 30 5746

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 240 250 (DU PONT) * Page 2, line 6 - page 8, line 1; claims 1-10 * --- | 1-6 | C 08 G 18/65<br>C 08 G 18/80 |
| X | EP-A-0 310 974 (BAYER) * Column 9, line 23 - column 10, line 47; claims 1,5 * --- | 1-6 | |
| A | FR-A-2 073 959 (BAYER) * Page 2, line 5 - page 4, line 28; claims 1,2 * --- | 1-6 | |
| D,A | EP-A-0 177 766 (BAYER) ----- | 1 | |

TECHNICAL FIELDS SEARCHED (Int. Cl.5)

C 08 G

The present search report has been drawn up for all claims

| Place of search | Date of completion of the search | Examiner |
|---|---|---|
| THE HAGUE | 19-09-1990 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)